# FASCICULE DE BREVET EUROPEEN

(11) **EP 2 770 315 B1**
(45) Date de publication et mention de la délivrance du brevet: **31.03.2021**
(21) Numéro de dépôt: 13156177.1
(22) Date de dépôt: 21.02.2013
(51) Int. Cl.: G01M 3/00, G01M 3/32

(54) **Dispositif électronique muni de moyens de détection automatique de fuite**
Elektronische Vorrichtung, die mit Mitteln zur automatischen Erkennung eines Lecks ausgestattet ist
Electronic device provided with an automatic leak detection means

(43) Date de publication de la demande: 27.08.2014
(73) Titulaire: The Swatch Group Research and Development Ltd., 2074 Marin (CH)
(72) Inventeur: Willemin, Michel, 2515 Prêles (CH); Martin, Jean-Claude, 2037 Montmollin (CH); Germiquet, Christophe, 2515 Prêles (CH)
(74) Mandataire: Giraud, Eric

(56) Documents cités:
- JP-A- 2008 132 893
- JP-A- 2010 151 656
- US-A1- 2012 243 854

## Description

L'invention concerne un dispositif électronique, qui est muni de moyens de détection automatique de fuite, c'est-à-dire pour contrôler une certaine étanchéité d'un boîtier du dispositif électronique. Le dispositif électronique peut être un appareil électronique de dimension importante ou de préférence un instrument électronique portable, comme un téléphone portable ou une montre, telle qu'une montre-bracelet.

L'invention concerne également un procédé de détection automatique de fuite d'un dispositif électronique.

Un dispositif électronique peut être par exemple une montre-bracelet. Cette montre est constituée de pièces mécaniques et électroniques, qui doivent être à l'abri généralement de l'eau ou de l'humidité ou divers gaz de l'environnement. Une détection de fuite généralement de gaz doit être effectuée de manière à déterminer un degré d'étanchéité de la montre et principalement du boîtier enfermant tous les composants de la montre. Ce degré d'étanchéité est normalement déterminé lors de la conception du modèle de la montre, à savoir en fonction de l'épaisseur du boîtier avec le verre de montre et des joints d'étanchéité.

La mesure de l'étanchéité de la montre peut être définie sous une pression calculée en atmosphère ou en hecto Pascal. Différents degrés d'étanchéité peuvent être définis. Par exemple, pour se laver les mains avec une montre au poignet, elle doit être en mesure de supporter une pression de l'ordre de 3 atm, ce qui équivaut à une pression d'environ 3040 hecto Pascal. Pour prendre une douche avec la montre ou se baigner dans une piscine, elle doit être en mesure de supporter une pression de l'ordre de 5 atm, ce qui équivaut à une pression d'environ 5066 hecto Pascal. Pour une plongée dans une piscine, il faut qu'elle supporte une pression d'au moins 10 atm, ce qui équivaut à une pression d'environ 10133 hecto Pascal.

Il existe différents appareils de contrôle de l'étanchéité, notamment de dispositifs électroniques sous la forme de montres à boîtier. Il est connu d'utiliser un appareil, qui fonctionne par air comprimé pour effectuer ce test d'étanchéité. Il peut être observé par exemple, si la glace de montre se déforme, lorsque la montre est mise sous pression. Si la glace se déforme, cela signifie une bonne étanchéité de la montre, alors que si aucune déformation n'est constatée, la montre est jugée non étanche. Avec un tel appareil à air comprimé, cela permet de contrôler une montre dans des conditions similaires à celles de son utilisation normale. Un tel exemple d'appareil de contrôle est un des appareils sous référence SM 8850-XX de l'entreprise Sigma Electronic SA à Bienne en Suisse.

Cependant avec tout type d'appareil de contrôle d'étanchéité connu, cela complique la manière de garantir une bonne étanchéité d'un dispositif électronique, tel qu'une montre-bracelet. Les coûts de contrôle d'étanchéité de chaque dispositif électronique, sont donc importants. Généralement, rien n'est prévu dans l'état de la technique pour pouvoir effectuer une détection de fuite d'un dispositif électronique avec des moyens propres au dispositif électronique, ce qui constitue un inconvénient.

L'invention a donc pour but de fournir un dispositif électronique, qui est muni de moyens de détection automatique de fuite, susceptible de pallier aux inconvénients de l'état de la technique, et permettant d'effectuer une mesure simple et peu onéreuse du degré d'étanchéité du dispositif électronique.

A cet effet, l'invention concerne un dispositif électronique, qui est une montre ou un téléphone portable, muni de moyens de détection automatique de fuite, qui comprend les caractéristiques mentionnées dans la revendication indépendante 1.

Des formes d'exécution particulières du dispositif électronique sont définies dans les revendications dépendantes 2 à 10.

Un avantage du dispositif électronique réside dans le fait que les moyens de détection automatique de fuite pour déterminer le degré d'étanchéité du dispositif, sont constitués d'éléments relativement bon marché. Aucune disposition particulière n'est prévue pour la fixation des capteurs de pression et de température dans le boîtier du dispositif électronique. Les deux capteurs peuvent faire partie d'un même module, qui est relié mécaniquement et électriquement sur une plaque à circuit imprimé. L'unité de calcul, qui est de préférence un microcontrôleur, est aussi reliée à la plaque à circuit imprimé pour être connectée aux deux capteurs et recevoir l'alimentation électrique d'une source de tension, qui peut être une batterie, une pile ou un accumulateur pour un dispositif électronique, tel qu'une montre-bracelet.

Avantageusement le microcontrôleur est prévu pour effectuer un contrôle en continu ou par périodes temporelles programmées des valeurs de pression et de température reçues par les capteurs. Le microcontrôleur contrôle si la variation de pression est proportionnelle ou dans une certaine marge proportionnelle à la variation de température à l'intérieur du boîtier. Si la variation de pression s'écarte d'une limite définie de la variation de température, il est signalé un degré d'étanchéité insuffisant du dispositif électronique.

Avantageusement dans le cas d'une montre électronique, le microcontrôleur peut détecter automatiquement, si le boîtier est correctement refermé après un changement de pile ou de batterie.

A cet effet, l'invention concerne également un procédé de détection automatique de fuite d'un dispositif électronique, qui est une montre ou un téléphone portable, et qui comprend les caractéristiques définies dans la revendication indépendante 11.

Des étapes particulières du procédé sont définies dans les revendications dépendantes 12 à 14.

Les buts, avantages et caractéristiques du dispositif électronique et du procédé de détection automatique de fuite du dispositif électronique apparaîtront mieux dans la description suivante sur la base d'une forme d'exécution simplifiée non limitative et illustrée par les dessins sur lesquels :
la figure 1 représente de manière simplifiée un dispositif électronique muni de moyens de détection automatique de fuite selon l'invention,
la figure 2 représente un graphique de la variation captée de pression et de température dans le temps et la pression normalisée pour un dispositif électronique défini comme étanche selon l'invention, et
la figure 3 représente un graphique de la variation captée de pression et de température dans le temps et la pression normalisée pour un dispositif électronique défini comme non étanche selon l'invention.

Dans la description suivante, tous les composants électroniques du dispositif électronique, qui sont bien connus d'un homme du métier dans ce domaine technique, ne sont décrits que de manière simplifiée. Le dispositif électronique peut être un appareil électronique de grande dimension, où une détection automatique de fuite doit être effectuée pour protéger certains composants placés dans un boîtier de l'appareil. De préférence, le dispositif électronique peut être un instrument électronique portable, comme un téléphone portable ou une montre, telle qu'une montre-bracelet.

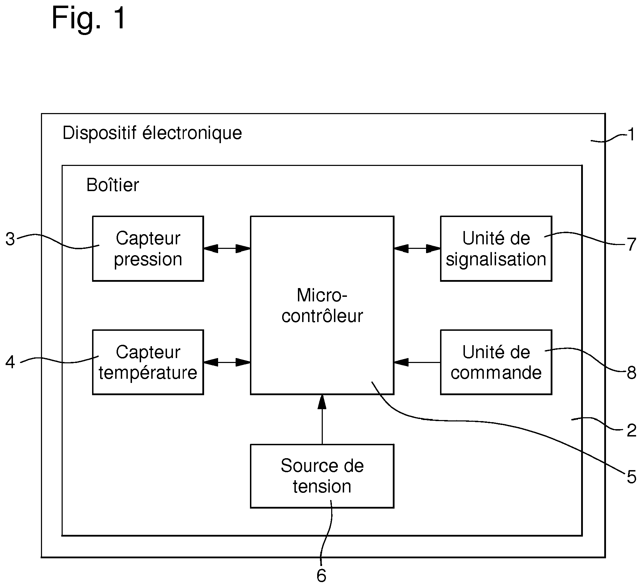

La figure 1 représente schématiquement un dispositif électronique 1, qui peut être par exemple une montre-bracelet, mais sans pour autant se limiter à ce domaine technique de l'horlogerie. Le dispositif électronique 1 comprend des moyens de détection automatique de fuite, notamment de fuite de gaz à travers un boîtier 2 du dispositif. Cela permet de déterminer si des composants électroniques du dispositif électronique sont disposés à l'intérieur d'un boîtier normalement hermétiquement fermé et selon un degré d'étanchéité suffisant. Cette détection ne permet pas de garantir une totale étanchéité du boîtier, mais uniquement d'indiquer un degré d'étanchéité selon une limite déterminée. Pour ce faire, une variation de température ou une variation de pression doit survenir pour détecter automatiquement une fuite du boîtier.

De manière générale pour la détection automatique de fuite, le dispositif électronique 1 comprend au moins un capteur de pression 3 et au moins un capteur de température 4. Les capteurs de pression 3 et de température 4 sont tous les deux connectés à une unité de calcul, qui est de préférence un microcontrôleur 5. Le microcontrôleur peut être alimenté électriquement par une source de tension 6, de manière à alimenter également les deux capteurs 3 et 4 lors de leur fonctionnement. Cette source de tension 6 peut être une pile, une batterie ou un accumulateur, dans le cas d'un dispositif électronique 1 sous la forme d'un téléphone portable ou d'une montre, telle qu'une montre-bracelet. Le microcontrôleur 5 et les deux capteurs 3 et 4 sont disposés sur une plaque à circuit imprimé traditionnelle, et entièrement dans le boîtier 2 du dispositif électronique 1 sans contact avec l'extérieur.

Le capteur de pression 3 et le capteur de température 4 peuvent faire partie d'un même module électronique. Ce module électronique existe sur le marché à faible coût. Il peut être utilisé le module T5400 d'EPCOS AG. Ce module électronique peut être facilement fixé sur la plaque à circuit imprimé sans devoir le protéger spécifiquement à l'intérieur du boîtier 2. Dans le cas d'une montre-bracelet, la plaque à circuit imprimé portant les différents composants électroniques se situe entre le cadran de montre et le fond du boîtier en prenant appui sur un bord intérieur de la carrure du boîtier 2.

Le dispositif électronique 1 comprend encore une unité de signalisation 7. Cette unité de signalisation 7 permet d'informer ou d'avertir un utilisateur de toute fuite constatée du dispositif électronique. L'unité de signalisation 7 fournit principalement une information, si le boîtier 2 est considéré comme non étanche. Pour le cas d'une montre-bracelet, l'unité de signalisation peut être un dispositif d'affichage par exemple du type LCD ou LED ou OLED ou divers autres types de dispositifs d'affichage. L'unité de signalisation peut être aussi constituée par une ou plusieurs aiguilles. Les aiguilles peuvent être des aiguilles d'indication de l'heure traditionnelle déplacées dans un mode de signalisation pour indiquer un défaut d'étanchéité. Cette unité de signalisation peut également être un générateur de sons pour générer un son en continu ou par intermittences, ou un vibreur.

Une unité de commande 8 peut encore être prévue dans le dispositif électronique 1. Cette unité de commande 8 peut être un bouton de contrôle pour tout type de dispositif électronique 1. Dans le cas d'une montre-bracelet ou d'un téléphone portable, cette unité de commande 8 peut être constituée par un ou plusieurs boutons ou couronnes ou touches tactiles capacitives. Ces touches tactiles peuvent être disposées sous une glace de montre ou de téléphone ou en périphérie de la glace de montre ou de téléphone. L'unité de commande 8 peut être manuellement activée par exemple pour la mise en fonction de la détection automatique de fuite ou pour obtenir diverses informations du dispositif électronique. Cependant il peut être envisagé, que la détection automatique de fuite peut être toujours activée indépendamment de toute action sur l'unité de commande.

Dans le microcontrôleur 5, il peut être contrôlé l'évolution de la pression du gaz à l'intérieur du boîtier 2 du dispositif électronique 1 par exemple une fois que l'effet de la température a été annulé. Le microcontrôleur 5 est destiné à contrôler sur la base de mesures effectuées par le capteur de pression 3 et le capteur de température 4 dans le temps, si la variation de la pression dans le boîtier 2 est proportionnelle à la variation de la température. Ceci permet de déterminer si le boîtier est d'un degré d'étanchéité suffisant ou non. Le boîtier 2 du dispositif électronique 1 n'est pas étanche, si le changement de la pression à l'intérieur du boîtier du dispositif est plus rapide qu'une valeur limite déterminée. La vitesse limite de changement de pression interne admise dans le domaine de l'horlogerie est généralement de 3 heures pour passer d'une pression initiale à une pression ambiante actuelle.

Pour un gaz, la pression p du gaz dans le volume intérieur V du boîtier 2 du dispositif électronique 1 est déterminée par la formule p·V = n·R·T, où T est la température, n est la quantité de matière exprimée en moles, et R est la constante universelle des gaz. Pour déterminer que le boîtier du dispositif peut être considéré comme suffisamment étanche, il faut que la variation de pression du gaz à l'intérieur du boîtier soit proportionnelle ou dans une marge définie proportionnelle à la variation de température. Cela signifie qu'en principe le rapport p/T doit être constant pendant une durée déterminée pour garantir que le boîtier 2 par exemple de la montre ou du téléphone portable est bien étanche. Pour pouvoir effectuer une détection automatique de fuite dans le dispositif électronique de la présente invention, il est nécessaire d'avoir soit une variation de pression, soit une variation de température. Aucune détection automatique ne peut être efficacement effectuée si aucune variation de pression ou de température n'intervient.

Généralement si ce rapport p/T est toujours constant par exemple après 10 heures, le boîtier 2 de la montre ou du téléphone portable peut être considéré comme étanche. Il est précisé dans le domaine de l'horlogerie et selon les normes NIHS, que le boîtier 2 d'une montre est étanche, si moins de 50 µg de gaz est perdu par minute à travers le boîtier et sous une différence de pression de l'ordre de 2 bars entre la pression externe et la pression interne. Cela signifie normalement qu'il faut environ 3 heures pour équilibrer la pression externe avec la pression interne comme susmentionné.

Si le microcontrôleur 5 détermine que le rapport p/T n'est plus constant, le porteur de la montre ou du téléphone portable est informé par l'unité de signalisation 7, que la montre ou le téléphone n'est plus étanche. Une telle mesure peut être effectuée automatiquement sous le contrôle du microcontrôleur 5 dans le dispositif électronique 1, par exemple chaque heure. Dans le cas d'une montre, il peut être prévu d'effectuer un contrôle d'étanchéité à chaque intervalle temporel défini entre 1 et 6 heures. Cependant le microcontrôleur 5 peut être programmé pour déterminer en continu la variation de la pression et la variation de la température, et calculer après chaque intervalle temporel déterminé le rapport entre la valeur de pression et la valeur de température.

Il peut être envisagé que le microcontrôleur 5 prenne en compte plusieurs valeurs de pression et de température dans des périodes ou intervalles temporels plus courts qu'une heure. Ces valeurs sont mémorisées et/ou le rapport entre chaque valeur de pression et chaque valeur de température dans le temps peut aussi être mémorisé. Les intervalles temporels peuvent être également de l'ordre de la minute ou de quelques minutes. Un calcul du rapport p/T à chaque intervalle temporel prévu permet de constater, si le boîtier est d'un degré d'étanchéité suffisant ou non.

Dans le cas d'une montre, telle qu'une montre-bracelet, des garnitures d'étanchéité sont utilisées entre les pièces du boîtier à fixer l'une sur l'autre. Ces garnitures ou joints d'étanchéité, comprimés lors de la fermeture du fond du boîtier sur la carrure, ne garantissent pas une totale étanchéité généralement. Du gaz et principalement de l'air peut passer à travers ces garnitures d'étanchéité dans le temps. Ces joints ou garnitures d'étanchéité en matériau plastique sont perméables. Ces joints peuvent également ne pas être propres, ce qui rend le boîtier non étanche.

Avec un contrôle automatique en continu par le microcontrôleur 5 ou par intervalles temporels courts, il est possible de rapidement savoir notamment lors d'un changement de pile de la montre, si le boîtier est correctement fermé ou non. La consommation électrique du fonctionnement du microcontrôleur 5 et des capteurs 3 et 4 pour déterminer le degré d'étanchéité du boîtier 2 est d'une faible valeur, ce qui ne péjore pas la durée de vie de la pile ou batterie de la montre. La pression de gaz dans le volume intérieur du boîtier 2 peut augmenter entre une valeur de la pression ambiante externe à 970 hecto Pascal avant fermeture et une valeur de pression interne à environ 1020 hecto Pascal, voire 1100 hecto Pascal après fermeture du boîtier. Cela correspond à 5% de pression supplémentaire dans le volume intérieur du boîtier après fermeture.

Dans le cas où le boîtier a mal été refermé, un équilibre entre la pression interne et la pression ambiante survient rapidement avec une forte variation de pression déjà après une dizaine de secondes, voire après 1 à 5 minutes par rapport à la variation de la température. Cela signifie que les rapports p/T calculés par le microcontrôleur 5 ne sont pas constants sur une courte période temporelle. Une forte différence de pression interne est constatée au moment de la fermeture du boîtier, et une forte différence inverse de pression interne peut aussi être constatée après la fermeture, si le boîtier est mal refermé ou un joint endommagé, mal placé ou manquant. La personne, normalement l'horloger, peut ainsi être directement informée, si oui ou non le boîtier a été correctement refermé de manière à garantir un degré d'étanchéité suffisant du boîtier refermé.

Il est à noter qu'un avertissement peut aussi être fourni au porteur de la montre, si les joints ou garnitures d'étanchéité se sont asséchés ou usés ou déplacés, ce qui conduit à un degré d'étanchéité non suffisant. Avec cela, il est possible de remplacer ces joints d'étanchéité et de constater par la suite que le microcontrôleur 5 ne signale plus de défaut d'étanchéité. Sans signalement par l'unité de signalisation 7, le porteur de la montre est assuré que la montre dispose d'un degré d'étanchéité suffisant en fonction de l'application souhaitée de la montre.

La surpression du gaz dans le volume intérieur du boîtier après fermeture dudit boîtier 2 diminuera très lentement à une température constante, si la montre est étanche. La pression mesurée à l'intérieur peut être à la pression ambiante dans un laps de temps pouvant aller bien au-delà de 10 heures, et même jusqu'à un mois. Ceci est dépendant de la garniture d'étanchéité de la montre. Par contre si après 1 heure, on constate une sérieuse différence de pression mesurée dans la montre à une même température, cela signifie que la montre n'est plus étanche et le porteur en est directement informé.

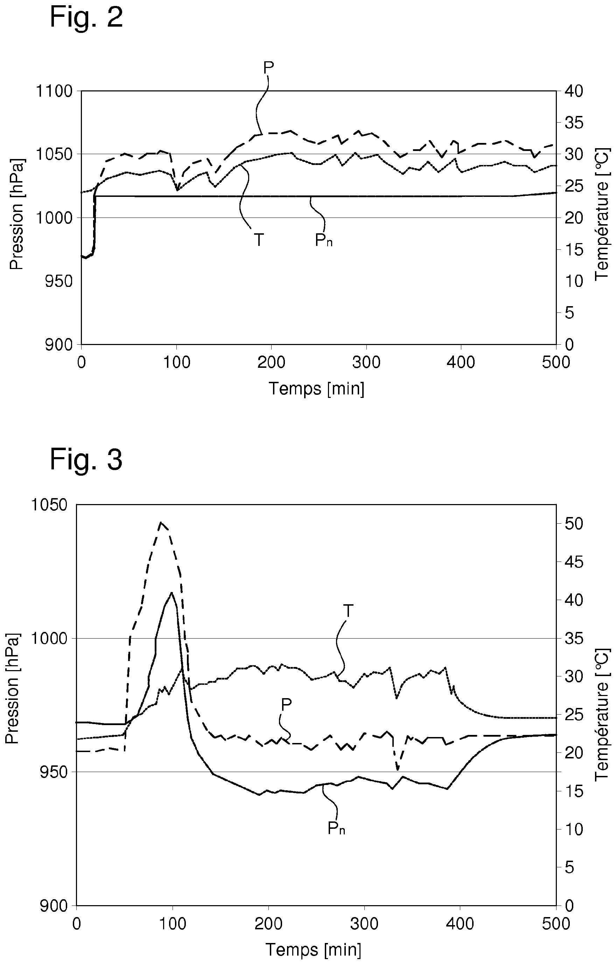

La différence entre un boîtier 2 considéré comme suffisamment étanche et un boîtier considéré comme non étanche et signalé à un utilisateur, est bien représentée aux figures 2 et 3. Sur ces figures 2 et 3, il est principalement représenté un graphe de la variation de pression p et de la variation de température T dans le temps à l'intérieur du boîtier. Une pression normalisée pₙ est déterminée par le microcontrôleur en référence à une température de 298 °K, ce qui correspond à une température de 25 °C T_{25°C}. Le rapport p/T entre une valeur de pression p mesurée par le capteur de pression et une valeur de température T mesurée par le capteur de température doit être égal à pₙ/T_{25°C} Ainsi la pression normalisée pₙ correspond à (p/T)·T_{25°C}.

Si le boîtier est d'un degré d'étanchéité suffisant, cette pression normalisée pₙ ne changera que très peu dans le temps. Par contre, si le boîtier n'est pas suffisamment étanche, cette pression normalisée pₙ va évoluer dans le temps. Cela signifie que la variation de pression n'est plus proportionnelle à la variation de température. Dans ces conditions, l'écart entre deux valeurs de pression normalisée pₙ en deux instants successifs dans le temps peut être supérieur en valeur absolue à une référence de pression définissant le degré d'étanchéité suffisant du boîtier. Cette référence peut être définie par exemple à une valeur de 2 hecto Pascal ou supérieure. Cet écart Δp est égal à une première valeur de pression normalisée pₙ1 à un premier temps t1 soustraite à une seconde valeur de pression normalisée pₙ2 à un second temps t2. Cet écart de pression Δp peut être défini chaque heure par exemple, voire pour des intervalles temporels pouvant aller jusqu'à 6 heures de manière à contrôler si l'écart est supérieur ou inférieur à la référence de pression. Cependant il peut aussi être défini en fonction d'instants successifs plus courts, comme indiqué ci-devant.

A la figure 2, il est justement représenté un graphe de la variation de pression à l'intérieur d'un boîtier d'une montre et de la variation de la température dans le temps. Au début de la mesure, le boîtier est ouvert notamment pour le changement d'une pile. La pression est donc mesurée à une valeur initiale de 970 hecto Pascal, ce qui correspond à la pression ambiante externe. La température dans ce cas de figure avant fermeture est de l'ordre de 25 °C. Après 20 minutes, le fond du boîtier est fixé à la carrure en comprimant une garniture d'étanchéité, ce qui génère une surpression et la pression interne est ainsi mesurée à une valeur de l'ordre de 1020 hecto Pascal. La pression normalisée pₙ se situe également à une valeur de l'ordre de 1020 hecto Pascal étant donné que la température est de 25 °C.

La montre est par la suite portée au poignet d'un utilisateur, ce qui signifie que la température T va sensiblement varier de 25 °C à un peu plus de 30 °C. On remarque qu'une fois que le boîtier de la montre a été fermé, la pression p mesurée par le capteur de pression varie proportionnellement à la température T mesurée par le capteur de température. Cela signifie que la pression normalisée pₙ ne va pas changer de manière notoire pendant près de 8 heures suivant le changement de pile. Le boîtier de la montre peut ainsi être considéré comme d'un degré d'étanchéité suffisant.

Il est à noter également que le rapport p/T déterminé à chaque intervalle de temps par le microcontrôleur va rester sensiblement constant durant près de 8 heures. Le microcontrôleur doit généralement tenir compte d'un gradient de température provenant du capteur de température, ce qui cause un retard dans la mesure. De ce fait, le microcontrôleur peut effectuer deux mesures suffisamment rapprochées à chaque intervalle temporel de mesure pour s'affranchir de ce problème de retard lors de la détermination du rapport p/T. Le microcontrôleur peut aussi effectuer une moyenne dans le temps des rapports p/T ou des valeurs de pression normalisée.

A la figure 3, il est par contre représenté un graphe de la variation de pression p à l'intérieur d'un boîtier d'une montre et de la variation de la température T dans le temps dans le cas d'un boîtier non étanche. Au départ, le boîtier de la montre est ouvert pour le changement de pile. La pression p mesurée par le capteur de pression est à une valeur de l'ordre de 960 hecto Pascal à une température T voisine de 21 °C (294 °K) mesurée par le capteur de température. La pression normalisée pₙ se situe donc à environ 970 hecto Pascal. Après 40 minutes, le boîtier est refermé et la pression interne monte jusqu'à une valeur de l'ordre de 1040 hecto Pascal. La température T monte également étant donné que la montre est placée au poignet d'un utilisateur. Cependant après moins de 2 heures, la pression interne p revient à une valeur proche de la pression ambiante externe à 960 hecto Pascal, mais la température T monte encore jusqu'à une valeur légèrement supérieure à 30 °C. La pression normalisée pₙ va donc monter à une valeur maximale de 1020 hecto Pascal, mais va rapidement redescendre après au moins 2 heures, comme la montre n'est pas étanche.

Dans ce cas de figure, l'écart Δp des valeurs de pression normalisée va varier durant toute la durée du test à une valeur supérieure à la référence déterminée. Par exemple cette référence peut être fixée à une valeur de l'ordre de 2 hecto Pascal. De plus, les différents rapports p/T déterminés, pour chaque intervalle temporel défini par le microcontrôleur, ne sont plus constants. Une signalisation peut être fournie dans ce cas au porteur de la montre pour lui indiquer un défaut d'étanchéité de sa montre.

A partir de la description qui vient d'être faite, plusieurs variantes du dispositif électronique muni de moyens de détection automatique de fuite peuvent être conçues par l'homme du métier sans sortir du cadre de l'invention définie par les revendications. Le dispositif électronique peut être une montre, telle qu'une montre de plongée, pour signaler au porteur de la montre rapidement, si la montre peut être jugée d'un degré d'étanchéité suffisant ou non. Cependant pour une telle montre de plongée considérée d'un degré d'étanchéité suffisant par les moyens de détection automatique de fuite, cela ne garantit pas à 100% son étanchéité pour effectuer une plongée, car dans ces conditions il doit encore être tenu compte des déformations des différentes pièces de la montre en fonction de la profondeur.

## Revendications

1. Dispositif électronique (1), qui est une montre ou un téléphone portable, et qui est muni de moyens de détection automatique de fuite d'un boîtier (2) du dispositif électronique (1), les moyens de détection automatique de fuite comprenant un capteur de pression (3), un capteur de température (4) et une unité de calcul (5) reliée au capteur de pression et au capteur de température, l'unité de calcul (5) avec le capteur de pression (3) et le capteur de température (4) étant disposés à l'intérieur du boîtier (2),
**caractérisé en ce que** l'unité de calcul (5) est destinée à contrôler sur la base de mesures effectuées par le capteur de pression (3) et le capteur de température (4) dans le temps, si la variation de la pression dans le boîtier (2) est proportionnelle à la variation de la température pour déterminer si le boîtier est d'un degré d'étanchéité suffisant ou non.

2. Dispositif électronique (1) selon la revendication 1, **caractérisé en ce que** l'unité de calcul (5) est destinée à calculer à des intervalles temporels successifs des rapports entre une valeur de pression fournie par le capteur de pression (3) et une valeur de température fournie par le capteur de température (4) à l'intérieur du boîtier (2), et à contrôler, si le rapport entre la pression et la température reste constant à chaque intervalle temporel successif de mesure pour déterminer si le boîtier est d'un degré d'étanchéité suffisant ou non.

3. Dispositif électronique (1) selon la revendication 1, **caractérisé en ce que** l'unité de calcul (5) est destinée à définir une pression normalisée à une température de référence sur la base des mesures effectuées par le capteur de pression (3) et le capteur de température (4) dans le temps, et à calculer un écart en valeur absolue entre des valeurs de pression normalisée, qui sont définies à deux intervalles temporels successifs pour contrôler si l'écart est supérieur ou inférieur à une référence de pression pour déterminer si le boîtier est d'un degré d'étanchéité suffisant ou non.

4. Dispositif électronique (1) selon la revendication 1, **caractérisé en ce que** l'unité de calcul est un microcontrôleur (5).

5. Dispositif électronique (1) selon la revendication 4, **caractérisé en ce que** le microcontrôleur (5) est alimenté par une source de tension (6) disposée dans le boîtier (2).

6. Dispositif électronique (1) selon la revendication 5, **caractérisé en ce que** la source de tension (6) est une pile ou un accumulateur.

7. Dispositif électronique (1) selon la revendication 5, **caractérisé en ce que** le microcontrôleur (5), ainsi que les capteurs de pression (3) et de température (4), sont mis en fonction au moment de la connexion de la source de tension (6) ou après l'activation d'une unité de commande (8).

8. Dispositif électronique (1) selon la revendication 7, **caractérisé en ce que** l'unité de commande (8) est constituée par un ou plusieurs boutons ou couronnes ou touches tactiles capacitives disposées sous une glace de montre ou de téléphone ou en périphérie de la glace de montre ou de téléphone.

9. Dispositif électronique (1) selon la revendication 1, **caractérisé en ce que** l'unité de calcul (5) commande une unité de signalisation (7) du dispositif électronique (1) de manière à signaler un degré d'étanchéité non suffisant au-dessus d'une limite déterminée.

10. Dispositif électronique (1) selon la revendication 9, **caractérisé en ce que** l'unité de signalisation (7) est un dispositif d'affichage ou une ou plusieurs aiguilles pour une montre, ou un générateur de sons pour générer un son en continu ou par intermittences, ou un vibreur.

11. Procédé de détection automatique de fuite d'un dispositif électronique (1), qui est une montre ou un téléphone portable, et qui est muni de moyens de détection automatique de fuite d'un boîtier (2) du dispositif électronique (1), les moyens de détection automatique de fuite comprenant un capteur de pression (3), un capteur de température (4) et une unité de calcul (5) reliée au capteur de pression et au capteur de température, l'unité de calcul (5) avec le capteur de pression (3) et le capteur de température (4) étant disposés à l'intérieur du boîtier (2), **caractérisé en ce que** le procédé comprend les étapes de :
- mettre en fonction l'unité de calcul (5), le capteur de pression (3) et le capteur de température (4),
- contrôler dans l'unité de calcul (5) sur la base de mesures effectuées par le capteur de pression (3) et le capteur de température (4) dans le temps, si la variation de la pression dans le boîtier (2) est dans une marge définie proportionnelle à la variation de la température, et
- déterminer en fonction de la variation de pression par rapport à la variation de température dans le temps, si le boîtier est d'un degré d'étanchéité suffisant ou non.

12. Procédé selon la revendication 11, **caractérisé en ce que** pour le contrôle de la variation de pression et de la variation de température dans le boîtier (2), l'unité de calcul (5) calcule à des intervalles temporels successifs, des rapports entre une valeur de pression fournie par le capteur de pression (3) et une valeur de température fournie par le capteur de température (4) et contrôle si le rapport entre la pression et la température reste constant à chaque intervalle temporel successif de mesure pour déterminer si le boîtier est d'un degré d'étanchéité suffisant ou non.

13. Procédé selon la revendication 11, **caractérisé en ce que** l'unité de calcul (5) en fonction définit une pression normalisée à une température de référence sur la base des mesures effectuées par le capteur de pression (3) et le capteur de température (4) dans le temps, et calcule un écart en valeur absolue entre des valeurs de pression normalisée, qui sont définies à deux intervalles temporels successifs pour contrôler si l'écart est supérieur ou inférieur à une référence de pression pour déterminer si le boîtier est d'un degré d'étanchéité suffisant ou non.

14. Procédé selon la revendication 11, **caractérisé en ce qu'**une signalisation est fournie si un degré d'étanchéité du dispositif électronique (1) est déterminé non suffisant et au-dessus d'une limite déterminée.

## Patentansprüche

1. Elektronische Vorrichtung (1), die eine Uhr oder ein tragbares Telefon ist und die mit Mitteln zur automatischen Erkennung eines Lecks eines Gehäuses (2) der elektronischen Vorrichtung (1) ausgestattet ist, wobei die Mittel zur automatischen Erkennung eines Lecks einen Drucksensor (3), einen Temperatursensor (4) und eine Recheneinheit (5) umfassen, die mit dem Drucksensor und mit dem Temperatursensor verbunden ist, wobei die Recheneinheit (5) mit dem Drucksensor (3) und dem Temperatursensor (4) im Inneren des Gehäuses (2) angeordnet ist,
**dadurch gekennzeichnet, dass** die Recheneinheit (5) bestimmt ist, auf der Basis von mit dem Drucksensor (3) und dem Temperatursensor (4) in der Zeit durchgeführten Messungen zu kontrollieren, ob die Druckschwankung in dem Gehäuse (2) proportional zur Temperaturschwankung ist, um zu bestimmen, ob der Dichtigkeitsgrad des Gehäuses ausreichend ist oder nicht.

2. Elektronische Vorrichtung (1) nach Anspruch 1, **dadurch gekennzeichnet, dass** die Recheneinheit (5) bestimmt ist, in aufeinanderfolgenden Zeitintervallen Verhältnisse zwischen einem von dem Drucksensor (3) bereitgestellten Druckwert und einem von dem Temperatursensor (4) bereitgestellten Temperaturwert im Inneren des Gehäuses (2) zu berechnen und zu kontrollieren, ob das Verhältnis zwischen dem Druck und der Temperatur in jedem aufeinanderfolgenden Zeitmessintervall konstant bleibt, um zu bestimmen, ob der Dichtigkeitsgrad des Gehäuses ausreichend ist oder nicht.

3. Elektronische Vorrichtung (1) nach Anspruch 1, **dadurch gekennzeichnet, dass** die Recheneinheit (5) bestimmt ist, einen Standarddruck bei einer Referenztemperatur auf der Basis der von dem Drucksensor (3) und dem Temperatursensor (4) in der Zeit durchgeführten Messungen zu definieren und eine Abweichung in absolutem Wert zwischen Standarddruckwerten zu berechnen, die in zwei aufeinanderfolgenden Zeitintervallen definiert sind, um zu kontrollieren, ob die Abweichung größer oder kleiner als eine Druckreferenz ist, um zu bestimmen, ob der Dichtigkeitsgrad des Gehäuses ausreichend ist oder nicht.

4. Elektronische Vorrichtung (1) nach Anspruch 1, **dadurch gekennzeichnet, dass** die Recheneinheit ein Mikrocontroller (5) ist.

5. Elektronische Vorrichtung (1) nach Anspruch 4, **dadurch gekennzeichnet, dass** der Mikrocontroller (5) von einer Spannungsquelle (6) versorgt wird, die in dem Gehäuse (2) angeordnet ist.

6. Elektronische Vorrichtung (1) nach Anspruch 5, **dadurch gekennzeichnet, dass** die Spannungsquelle (6) eine Batterie oder ein Akkumulator ist.

7. Elektronische Vorrichtung (1) nach Anspruch 5, **dadurch gekennzeichnet, dass** der Mikrocontroller (5) sowie der Druck- (3) und Temperatursensor (4) im Augenblick der Verbindung mit der Spannungsquelle (6) oder nach Aktivierung einer Steuereinheit (8) in Betrieb gesetzt werden.

8. Elektronische Vorrichtung (1) nach Anspruch 7, **dadurch gekennzeichnet, dass** die Steuereinheit (8) aus einem oder mehreren Knöpfen oder Kronen oder berührungsempfindlichen Tasten besteht, die unter einem Uhren- oder Telefonglas oder am Umfang des Uhren- oder Telefonglases angeordnet sind.

9. Elektronische Vorrichtung (1) nach Anspruch 1, **dadurch gekennzeichnet, dass** die Recheneinheit (5) eine Signaleinheit (7) der elektronischen Vorrichtung (1) derart steuert, dass ein ungenügender Dichtigkeitsgrad oberhalb eines bestimmten Grenzwerts signalisiert wird.

10. Elektronische Vorrichtung (1) nach Anspruch 9, **dadurch gekennzeichnet, dass** die Signaleinheit (7) eine Anzeigevorrichtung oder ein oder mehrere Zeiger für eine Uhr oder ein Tonerzeuger zur Erzeugung eines Dauer- oder intermittierenden Tons oder ein Vibrator ist.

11. Verfahren zur automatischen Erkennung eines Lecks einer elektronischen Vorrichtung (1), die eine Uhr oder ein tragbares Telefon ist und die mit Mitteln zur automatischen Erkennung eines Lecks eines Gehäuses (2) der elektronischen Vorrichtung (1) ausgestattet ist, wobei die Mittel zur automatischen Erkennung eines Lecks einen Drucksensor (3), einen Temperatursensor (4) und eine Recheneinheit (5) umfassen, die mit dem Drucksensor und mit dem Temperatursensor verbunden ist, wobei die Recheneinheit (5) mit dem Drucksensor (3) und dem Temperatursensor (4) im Inneren des Gehäuses (2) angeordnet ist, **dadurch gekennzeichnet, dass** das Verfahren die Schritte umfasst:
- Inbetriebsetzen der Recheneinheit (5), des Drucksensors (3) und des Temperatursensors (4),
- Kontrollieren, in der Recheneinheit (5) auf der Basis von vom Drucksensor (3) und vom Temperatursensor (4) in der Zeit durchgeführten Messungen, ob die Druckschwankung in dem Gehäuse (2) innerhalb einer definierten Marge liegt, die zu der Temperaturschwankung proportional ist, und
- Bestimmen, in Abhängigkeit von der Druckschwankung in Bezug auf die Temperaturschwankung in der Zeit, ob der Dichtigkeitsgrad des Gehäuses ausreichend ist oder nicht.

12. Verfahren nach Anspruch 11, **dadurch gekennzeichnet, dass** die Recheneinheit (5) zur Kontrolle der Druckschwankung und der Temperaturschwankung in dem Gehäuse (2) in aufeinanderfolgenden Zeitintervallen Verhältnisse zwischen einem von dem Drucksensor (3) bereitgestellten Druckwert und einem von dem Temperatursensor (4) bereitgestellten Temperaturwert berechnet und kontrolliert, ob das Verhältnis zwischen dem Druck und der Temperatur in jedem aufeinanderfolgenden Zeitmessintervall konstant bleibt, um zu bestimmen, ob der Dichtigkeitsgrad des Gehäuses ausreichend ist oder nicht.

13. Verfahren nach Anspruch 11, **dadurch gekennzeichnet, dass** die Recheneinheit (5) im Betrieb einen Standarddruck bei einer Referenztemperatur auf der Basis der von dem Drucksensor (3) und dem Temperatursensor (4) in der Zeit durchgeführten Messungen definiert und eine Abweichung in absolutem Wert zwischen Standarddruckwerten berechnet, die in zwei aufeinanderfolgenden Zeitintervallen definiert sind, um zu kontrollieren, ob die Abweichung größer oder kleiner als eine Druckreferenz ist, um zu bestimmen, ob der Dichtigkeitsgrad des Gehäuses ausreichend ist oder nicht.

14. Verfahren nach Anspruch 11, **dadurch gekennzeichnet, dass** eine Signalisierung bereitgestellt wird, wenn ein Dichtigkeitsgrad der elektronischen Vorrichtung (1) als ungenügend und oberhalb eines bestimmten Grenzwerts festgestellt wird.

## Claims

1. Electronic device (1), which is a watch or a mobile telephone, and which is provided with an automatic leak detection means of a case (2) of the electronic device (1), automatic leak detection means including a pressure sensor (3), a temperature sensor (4) and a calculation unit (5) connected to the pressure sensor and to the temperature sensor, the calculation unit (5), the pressure sensor (3) and the temperature sensor (4) being arranged inside the case (2),
**characterized in that** the calculation unit (5) is intended to check, based on measurements made by the pressure sensor (3) and the temperature sensor (4) over time, whether the variation in pressure inside the case (2) is proportional to the variation in temperature to determine whether or not the case has a sufficient degree of sealing.

2. Electronic device (1) according to claim 1, **characterized in that** the calculation unit (5) is intended to calculate, at successive time intervals, ratios between a pressure value provided by the pressure sensor (3) and a temperature value provided by the temperature sensor (4) inside the case (2), and to check whether the ratio between the pressure and the temperature remains constant at each successive time interval to determine whether or not the case has a sufficient degree of sealing.

3. Electronic device (1) according to claim 1, **characterized in that** the calculation unit (5) is intended to define a standardised pressure at a reference temperature based on measurements made by the pressure sensor (3) and the temperature sensor (4) over time, and to calculate a difference in absolute value between the standardised pressure values, which are defined at two successive time intervals to check whether the difference is greater than or less than a pressure reference to determine whether or not the case has a sufficient degree of sealing.

4. Electronic device (1) according to claim 1, **characterized in that** the calculation unit is a microcontroller (5).

5. Electronic device (1) according to claim 4, **characterized in that** the microcontroller (5) is powered by a voltage source (6) disposed inside the case (2).

6. Electronic device (1) according to claim 5, **characterized in that** the voltage source (6) is a battery or accumulator.

7. Electronic device (1) according to claim 5, **characterized in that** the microcontroller (5) and the pressure sensor (3) and the temperature sensor (4) are actuated at the moment of connection of the voltage source (6) or after the actuation of a control unit (8).

8. Electronic device (1) according to claim 7, **characterized in that** the control unit (8) is formed by one or more buttons or crowns or capacitive tactile keys disposed underneath a watch crystal or telephone glass screen or at the periphery of a watch crystal or telephone glass screen.

9. Electronic device (1) according to claim 1, **characterized in that** the calculation unit (5) controls a signalling unit (7) of the electronic device (1) so as to indicate an insufficient degree of sealing above a determined threshold.

10. Electronic device (1) according to claim 9, **characterized in that** the signalling unit (7) is a display device or one or more hands for a watch, or a sound generator for generating a continuous or intermittent sound, or a vibrator.

11. Automatic leak detection method for an electronic device (1), which is a watch or a mobile telephone, and which is provided with an automatic leak detection means of a case (2) of the electronic device (1), the automatic leak detection means including a pressure sensor (3), a temperature sensor (4) and a calculation unit (5) connected to the pressure sensor and to the temperature sensor, the calculation unit (5) together with the pressure sensor (3) and temperature sensor (4) being arranged inside the case (2), **characterized in that** the method includes the steps of:
- actuating the calculation unit (5), the pressure sensor (3) and the temperature sensor (4),
- checking in the calculation unit (5), based on measurements performed by the pressure sensor (3) and the temperature sensor (4) over time, whether the pressure variation in the case (2) is within a defined margin proportional to the variation in temperature, and
- determining as a function of the variation in pressure relative to the variation in temperature over time, whether or not the case has a sufficient degree of sealing.

12. Method according to claim 11, **characterized in that** to check the variation in pressure and the variation in temperature in the case (2), the calculation unit (5) calculates, at successive time intervals, ratios between a pressure value provided by the pressure sensor (3) and a temperature value provided by the temperature sensor (4) and checks whether the ratio between the pressure and the temperature remains constant at each successive measurement time interval to determine whether or not the case has a sufficient degree of sealing.

13. Method according to claim 11, **characterized in that** the calculation unit (5) defines a standardised pressure at a reference temperature based on measurements made by the pressure sensor (3) and the temperature sensor (4) over time, and calculates a difference in absolute value between the standardised pressure values, which are defined at two successive time intervals to check whether the difference is greater than or less than a pressure reference to determine whether or not the case has a sufficient degree of sealing.

14. Method according to claim 11, **characterized in that** a warning is given if the degree of sealing of the electronic device (1) is determined to be insufficient and beyond a determined threshold.
